# EUROPEAN PATENT SPECIFICATION

(11) **EP 3 944 995 B1**
(45) Date of publication and mention of the grant of the patent: **24.01.2024**
(21) Application number: 20188671.0
(22) Date of filing: 30.07.2020
(51) Int. Cl.: B60S 5/04, G01L 17/00, G06T 7/00, B60C 23/04, B60C 23/00

(54) **METHOD AND A SYSTEM FOR FILLING VEHICLE TIRES WITH PRESSURIZED AIR**
VERFAHREN UND SYSTEM ZUM BEFÜLLEN VON FAHRZEUGREIFEN MIT DRUCKLUFT
PROCÉDÉ ET SYSTÈME DE REMPLISSAGE DE PNEUMATIQUES DE VÉHICULE AVEC DE L'AIR SOUS PRESSION

(43) Date of publication of application: 02.02.2022
(73) Proprietor: Sumitomo Rubber Industries, Ltd., Kobe-shi, Hyogo-ken 651-0072 (JP)
(72) Inventor: SCHUCHHARDT, Bernd, 63456 Hanau (DE)
(74) Representative: Manitz Finsterwald Patent- und Rechtsanwaltspartnerschaft mbB

(56) References cited:
- WO-A1-2013/065049
- WO-A1-2013/069014
- DE-A1-102012 008 284
- KR-A- 20150 025 708
- KR-A- 20190 072 219
- US-A1- 2011 172 821
- US-A1- 2015 059 918

## Description

The present invention is directed at a method and a system for filling vehicle tires with pressurized air.

Known methods and systems for filling vehicle tires are mainly manual. The correct pressure to be provided to a vehicle tire in general depends on the tire type, the vehicle type, the position of the tire on the car, front wheel tire or rear wheel tire, and the actual or intended load condition of the vehicle. The correct tire pressure can be taken from tables provided by tire manufacturers. Often, the correct tire pressure is indicated on a sticker attached to some convenient place at the car, for example inside the tank lid.

WO 2013/065049 A1 and WO 2013/069014 A1 disclose methods and systems for estimating the pneumatic pressure state of a vehicle tire by image processing.

US 2015/059918 A1 discloses a camera configured to capture an image of a placard which is further analysed via character recognition.

It is an object of the present invention to provide a method and a system for filling vehicle tires which is at the same time simple and safe as regards the correct tire pressure.

This object is achieved by a method according to claim 1 and by a system according to claim 8.

According to the present invention the method for filling vehicle tires with pressurized air comprises the following steps.
A)
   a1) capturing an image of a tire to be filled, in particular the side wall of a tire,
   a2) determining the type of the tire of the captured tire image by means of an image recognition software,
      a3) capturing the image of a vehicle or part of a vehicle having the tire to be filled, in particular the number plate of the vehicle or FIN code or a bar code/ QR code or other vehicle identification means and determining the vehicle type by means of an image recognition software
      and, preferably,
      B)
         b1) capturing an image of a tire pressure table provided with the vehicle,
         b2) reading out tire pressure data of the table by means of a text recognition software;
            and
      C)
         c1) determining a correct tire pressure on the basis of the determined tire type and the determined vehicle type and, preferably, on the basis of the data of the tire pressure table,
         c2) providing the correct tire pressure data to a display and/or a tire pressure filling system.

The system for filling vehicle tires with pressurized air according to the invention comprises the following means.
A)
   a1) means for capturing an image of a tire to be filled, in particular the side wall of a tire,
   a2) means for determining the type of the tire of the captured tire image by means of an image recognition software,
   a3) means for capturing the image of a vehicle or part of a vehicle having the tire to be filled, in particular the number plate, FIN code or a bar code or QR code or other vehicle identification means, and for determining the vehicle type by means of an image recognition software
      and, preferably,
   B)
      b1) means for capturing an image of a tire pressure table provided with the vehicle,
      b2) means for reading out tire pressure data of the table by means of a text recognition software
         and
   C)
      c1) means for determining a correct tire pressure on the basis of the determined tire type and the determined vehicle type and, preferably, on the basis of the data of the tire pressure table,
      c2) means for providing the correct tire pressure data to a display and/or a tire pressure filling system.

According to the present invention the correct tire pressure data is determined automatically using image recognition software. The correct tire pressure data can be provided to a display and/or to a tire pressure filling system. If the data is provided only to a display, the user simply has to read out the data and fill up the respective tire to a pressure corresponding to said data or to input said data into a tire pressure filling system providing the inputted tire pressure automatically to a tire. If the correct tire pressure data is provided to a tire pressure filling system automatically, the user only has to connect the tire pressure filling system with the respective tire which is subsequently filled with the correct tire pressure by the tire pressure filling system automatically.

As can be easily understood, the filling of a vehicle tire is largely facilitated by the method and the system according to the present invention. In addition, the method and the system according to the present invention can secure the correct filling of a tire by pressurized air. In other words, the filling of a vehicle tire with incorrect tire pressure can be avoided by the method and the system according to the present invention.

According to a further embodiment of the present invention the method further comprises the steps of determining the actual loading condition of the vehicle on the basis of the captured vehicle image by means of an image recognition software or on the basis of information provided by the vehicle, and determining the correct tire pressure while considering the vehicle loading condition. Considering the vehicle loading condition helps securing the filling of the tire with the correct tire pressure. It is also possible to input the loading condition manually, in particular in case of an intended loading condition which is advantageous in case of filling up the tires with pressurized air before loading the vehicle with the intended load. As an option, the determined vehicle type can be also considered when determining the loading condition.

According to a further embodiment of the present invention the temperature of the tire and/or of the air inside the tire and/or the ambient temperature are measured and considered while determining the correct tire filling pressure. Considering the temperature further improves the correctness of the filling pressure.

The temperature can be measured preferably contactless by means of a sensor, in particular an infrared sensor, or by means of a contact sensor. These embodiments provide for very precise measuring of the temperature.

According to a further embodiment of the present invention the determined pressure data is stored in a data storage means, in particular together with the determined vehicle type and/or a vehicle identification code. The stored data can thus be used repeatedly when filling up the tire of a respective vehicle when the tires have not been changed. By storing the determined pressure data together with the determined vehicle type and/or vehicle identification code, the correct pressure data can be selected from a plurality of stored pressure data for a subsequent filling up of the tire of a specific vehicle with the correct air pressure.

According to a further embodiment of the present invention, the tire pressure filling system used in the inventive method provides a receipt of the filled-in pressure. By this, the correct filling of the tire can be proven in case of necessity.

The further embodiments of the system for filling vehicle tires with pressurized air according to the present invention have the same preferred embodiments and the same advantages indicated above regarding the method according to the present invention.

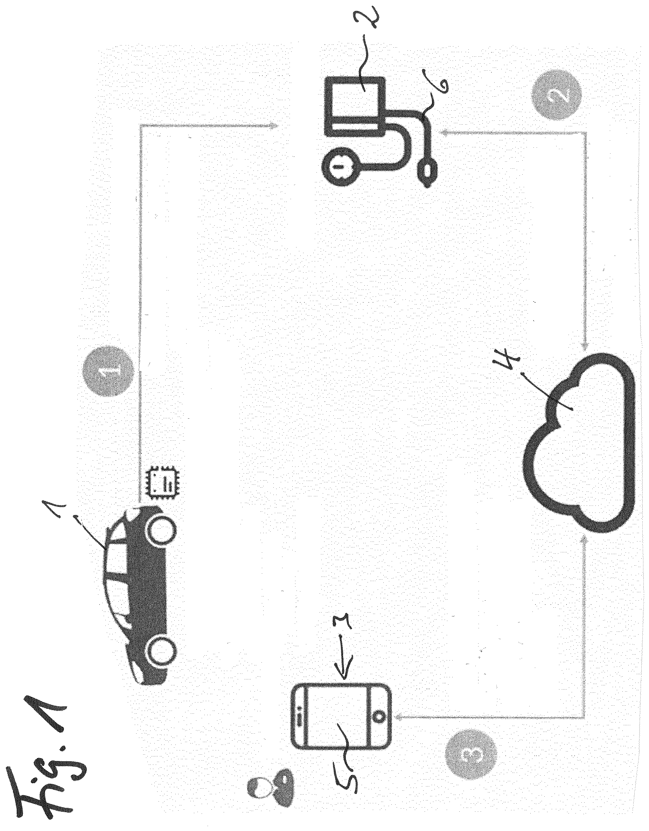

The filling of a vehicle tire with pressurized air according to the present invention is schematically shown in fig. 1.

A vehicle 1 with a tire to be filled with pressurized air is stopped close to an air filling station 2 having a tire pressure gauge . The driver of the vehicle takes a picture of the tire to be filled, in particular of the side wall of the tire. Further, the driver takes a picture of the vehicle having the tire to be filled or at least a part of said vehicle, for example the number plate or FIN code or barcode/QR code or other vehicle identification means. For taking said pictures a smartphone 3 can be used. The smartphone 3 or other means has software stored thereon which is suitable for determining the type of the tire on the basis of the picture taken by the driver.

Further, the smartphone 3 or other means comprises software for determining the vehicle type based on the picture taken by the driver. Such determining step can be performed by comparing the pictures with pictures stored in the smartphone 3 or on a server, in particular cloud server 4 to which the smartphone 3 or other means can connect. The correct tire pressure data is then provided to a display 5 of the smartphone 3 or other means or, the correct data is transmitted by the smartphone 3 or other means to the air filling station 2. The software stored on the smartphone 3 or other means can further provide instructions to the driver inviting him to connect an air hose 6 of the air filling station 2 to the tire to be filled. Said instructions can also include to invite the driver to connect the air filling station 2 to all tires of a vehicle 1 one after the other starting with a distinct tire, for example the front left tire, then the front right tire, then the rear right tire and finally the left rear tire. Of course, any other person can perform the steps described before.

Preferably, the air filling station 2 provides the correct tire pressure automatically once the driver has confirmed that the air filling station 2 has been connected to the respective tire. However, it is also possible that the driver is required to input the correct tire pressure into the air filling station 2 wherein the correct tire pressure can be read out by the driver from the display 5 of his smartphone 3 or other means. It is further preferred that the air filling station 2 provides a receipt indicating the tire pressure provided to the respective tire after the providing of the pressure has been finalized.

The air filling station 2 can include a temperature sensor for measuring the temperature of the tire and/or of the air inside the tire and/or the ambient temperature. Said temperature is considered when determining the correct tire pressure before providing it to the respective tire. The temperature can also be indicated on the receipt provided by the air filling station 2 after filling of the tire.

## Claims

1. Method for filling vehicle tires with pressurized air comprising the following steps:
A)
a1) capturing an image of a tire to be filled, in particular the side wall of a tire,
a2) determining the type of the tire of the captured tire image by means of an image recognition software,
a3) capturing the image of a vehicle or part of a vehicle having the tire to be filled, in particular the number plate of the vehicle or FIN code or a bar code/ QR code or other vehicle identification means and determining the vehicle type by means of an image recognition software;
and, preferably,
B)
b1) capturing an image of a tire pressure table provided with the vehicle,
b2) reading out tire pressure data of the table by means of a text recognition software;
and
C)
c1) determining a correct tire pressure on the basis of the determined tire type and the determined vehicle type and, preferably, on the basis of the data of the tire pressure table,
c2) providing the correct tire pressure data to a display and/or a tire pressure filling system.

2. Method according to claim 1, **characterized by** the following further steps:
f) determining the actual loading condition of the vehicle on the basis of the captured vehicle image by means of an image recognition software or on the basis of information provided by the vehicle, optionally with further considering of the determined vehicle type, or manually inputting a loading condition, in particular an intended loading condition
g) determining the correct tire pressure while considering the vehicle loading condition.

3. Method according to claim 1 or 2, **characterized in that** additionally the temperature of the tire and/or of the air inside the tire and/or the ambient temperature are measured and considered while determining the correct tire filling pressure.

4. Method according to claim 3, **characterized in that** the temperature is measured contactless by means of a sensor, in particular an infrared sensor, or by means of a contact sensor.

5. Method according to anyone of the preceding claims **characterized in that** the determined pressure data is stored in a data storage means, in particular together with the determined vehicle type and/or a vehicle identification code.

6. Method according to any one of claims 1 to 5, wherein the correct tire pressure data is provided to a tire pressure filling system, **characterized in that** the tire pressure filling system provides automatically the correct tire filling pressure to a tire.

7. Method according to anyone of claims 1 to 6, wherein the correct tire pressure data is provided to a tire pressure filling system, **characterized in that** the tire pressure filling system provides a receipt of the filled-in pressure.

8. System for filling vehicle tires with pressurized air comprising:
A)
a1) means for capturing an image of a tire to be filled, in particular the side wall of a tire,
a2) means for determining the type of the tire of the captured tire image by means of an image recognition software,
a3) means for capturing the image of a vehicle or part of a vehicle having the tire to be filled, in particular the number plate, FIN code or a bar code or OR code or other vehicle identification means, and for determining the vehicle type by means of an image recognition software;
and, preferably,
B)
b1) means for capturing an image of a tire pressure table provided with the vehicle,
b2) means for reading out tire pressure data of the table by means of a text recognition software
and
C)
c1) means for determining a correct tire pressure on the basis of the determined tire type and the determined vehicle type and, preferably, on the basis of the data of the tire pressure table,
c2) means for providing the correct tire pressure data to a display and/or a tire pressure filling system.

9. System according to claim 8, **characterized by** the further following means:
f) means for determining the actual loading condition of the vehicle on the basis of the captured vehicle image by means of an image recognition software or on the basis of information provided by the vehicle, optionally with further considering of the determined vehicle type, or means for manually inputting a loading condition, in particular an intended loading condition,
g) means for determining the correct tire pressure while considering said vehicle loading condition.

10. System according to claim 8 or 9, **characterized by** means for measuring the temperature of the tire and/or of the air inside the tire and/or the ambient temperature and for considering this data while determining the correct tire filling pressure.

11. System according to claim 10, **characterized in that** the means for measuring the temperature are a sensor, in particular an infrared sensor, or a contact sensor.

12. System according to anyone of claims 8 to 11, **characterized in that** it further comprises means for storing the determined pressure data in a data storage means,
in particular together with the determined vehicle type and/or vehicle identification code.

13. System according to anyone of claims 8 to 12, wherein the system comprises means for providing the correct tire pressure data to a tire pressure filing sytem, **characterized in that** the tire pressure filling system comprises means for automatically providing the correct tire filling pressure to a tire.

14. System according to anyone of claim 8 to 13, wherein the system comprises means for providing the correct tire pressure data to a tire pressure filing sytem, **characterized in that** the tire pressure filling system comprises means for providing a receipt of the filled in pressure.

## Patentansprüche

1. Verfahren zum Befüllen von Fahrzeugreifen mit Druckluft, das die folgenden Schritte umfasst:
A)
a1) Erfassen eines Bildes eines zu befüllenden Reifens, insbesondere der Seitenwand eines Reifens,
a2) Bestimmen des Reifentyps des aufgenommenen Reifenbildes mit Hilfe einer Bilderkennungssoftware,
a3) Erfassen des Bildes eines Fahrzeugs oder eines Teils eines Fahrzeugs mit dem zu befüllenden Reifen, insbesondere des Nummernschilds des Fahrzeugs oder eines FIN-Codes oder eines Barcodes/- QR-Codes oder eines anderen Fahrzeugidentifikationsmittels und Bestimmen des Fahrzeugtyps mittels einer Bilderkennungssoftware;
und, vorzugsweise,
B)
b1) Erfassen eines Bildes einer am Fahrzeug vorhandenen Reifendrucktabelle,
b2) Auslesen von Reifendruckdaten der Tabelle mit Hilfe einer Texterkennungssoftware;
und
C)
c1) Bestimmen eines korrekten Reifendrucks auf der Basis des bestimmten Reifentyps und des bestimmten Fahrzeugtyps und vorzugsweise auf der Basis der Daten der Reifendrucktabelle,
c2) Bereitstellen der korrekten Reifendruckdaten an einem Display und/oder einem Reifendruckfüllsystem.

2. Verfahren nach Anspruch 1, **gekennzeichnet durch** die folgenden weiteren Schritte:
f) Bestimmen des tatsächlichen Beladungszustandes des Fahrzeugs auf der Basis des erfassten Fahrzeugbildes mittels einer Bilderkennungssoftware oder auf der Basis von durch das Fahrzeug bereitgestellten Informationen,
wahlweise unter weiterer Berücksichtigung des bestimmten Fahrzeugtyps oder durch manuelle Eingabe eines Beladungszustandes, insbesondere eines beabsichtigten Beladungszustandes
g) Bestimmen des richtigen Reifendrucks unter Berücksichtigung des Beladungszustands des Fahrzeugs.

3. Verfahren nach Anspruch 1 oder 2, **dadurch gekennzeichnet, dass** zusätzlich die Temperatur des Reifens und/oder der Luft im Reifen und/oder die Umgebungstemperatur gemessen und bei dem Bestimmen des korrekten Reifenfülldrucks berücksichtigt wird.

4. Verfahren nach Anspruch 3, **dadurch gekennzeichnet, dass** die Temperatur berührungslos mittels eines Sensors, insbesondere eines Infrarotsensors, oder mittels eines Kontaktsensors gemessen wird.

5. Verfahren nach einem der vorhergehenden Ansprüche, **dadurch gekennzeichnet, dass** die ermittelten Druckdaten in einem Datenspeichermittel gespeichert werden, insbesondere zusammen mit dem bestimmten Fahrzeugtyp und/oder einem Fahrzeugidentifikationscode.

6. Verfahren nach einem der Ansprüche 1 bis 5, wobei die korrekten Reifendruckdaten an einem Reifendruckfüllsystem bereitgestellt werden, **dadurch gekennzeichnet, dass** das Reifendruckfüllsystem den korrekten Reifenfülldruck an einem Reifen automatisch bereitstellt.

7. Verfahren nach einem der Ansprüche 1 bis 6, wobei die korrekten Reifendruckdaten einem Reifendruckfüllsystem zur Verfügung gestellt werden, **dadurch gekennzeichnet, dass** das Reifendruckfüllsystem eine Quittung über den eingefüllten Druck bereitstellt.

8. System zum Befüllen von Fahrzeugreifen mit Druckluft, umfassend:
A)
a1) Mittel zum Erfassen eines Bildes eines zu befüllenden Reifens, insbesondere der Seitenwand eines Reifens,
a2) Mittel zum Bestimmen des Reifentyps des aufgenommenen Reifenbildes mit Hilfe einer Bilderkennungssoftware,
a3) Mittel zum Erfassen des Bildes eines Fahrzeugs oder eines Teils eines Fahrzeugs mit dem zu befüllenden Reifen, insbesondere des Nummernschilds, des FIN-Codes oder eines Strichcodes oder QR-Codes oder eines anderen Fahrzeugidentifikationsmittels, und zum Bestimmen des Fahrzeugtyps mittels einer Bilderkennungssoftware;
und, vorzugsweise,
B)
b1) Mittel zum Erfassen eines Bildes einer am Fahrzeug vorhandenen Reifendrucktabelle,
b2) Mittel zum Auslesen von Reifendruckdaten der Tabelle mittels einer Texterkennungssoftware,
und
C)
c1) Mittel zum Bestimmen eines korrekten Reifendrucks auf der Basis des bestimmten Reifentyps und des bestimmten Fahrzeugtyps und vorzugsweise auf der Basis der Daten der Reifendrucktabelle,
c2) Mittel zum Bereitstellen der korrekten Reifendruckdaten an einem Display und/oder einem Reifendruckfüllsystem.

9. System nach Anspruch 8, **gekennzeichnet durch** die weiteren folgenden Mittel:
f) Mittel zum Bestimmen des tatsächlichen Beladungszustandes des Fahrzeugs auf der Basis des erfassten Fahrzeugbildes mittels einer Bilderkennungssoftware oder auf der Basis von durch das Fahrzeug bereitgestellten Informationen, gegebenenfalls unter weiterer Berücksichtigung des bestimmten Fahrzeugtyps, oder Mittel zum manuellen Eingeben eines Beladungszustandes, insbesondere eines beabsichtigten Beladungszustandes,
g) Mittel zum Bestimmen des richtigen Reifendrucks unter Berücksichtigung des Beladungszustands des Fahrzeugs.

10. System nach Anspruch 8 oder 9, **gekennzeichnet durch** Mittel zum Messen der Temperatur des Reifens und/oder der Luft im Reifen und/oder der Umgebungstemperatur und zur Berücksichtigung dieser Daten bei dem Bestimmen des korrekten Reifenfülldrucks.

11. System nach Anspruch 10, **dadurch gekennzeichnet, dass** die Mittel zum Messen der Temperatur ein Sensor, insbesondere ein Infrarotsensor, oder ein Berührungssensor sind.

12. System nach einem der Ansprüche 8 bis 11, **dadurch gekennzeichnet, dass** es ferner Mittel zum Speichern der bestimmten Druckdaten in einem Datenspeichermittel umfasst,
insbesondere zusammen mit dem bestimmten Fahrzeugtyp und/oder Fahrzeugidentifizierungscode.

13. System nach einem der Ansprüche 8 bis 12, wobei das System Mittel zum Bereitstellen der korrekten Reifendruckdaten an einem Reifendruckfüllsystem umfasst, **dadurch gekennzeichnet, dass** das Reifendruckfüllsystem Mittel zum automatischen Bereitstellen des korrekten Reifenfülldrucks an einem Reifen umfasst.

14. System nach einem der Ansprüche 8 bis 13, wobei das System Mittel zum Bereitstellen der korrekten Reifendruckdaten an einem Reifendruckfüllsystem umfasst, **dadurch gekennzeichnet, dass** das Reifendruckfüllsystem Mittel zum Bereitstellen einer Bestätigung für den Fülldruck umfasst.

## Revendications

1. Procédé de remplissage de pneumatiques de véhicule avec de l'air pressurisé, comprenant les étapes suivantes :
A)
a1) capturer une image d'un pneumatique à remplir, en particulier de la paroi latérale pneumatique,
a2) déterminer le type du pneumatique de l'image de pneumatique capturée au moyen d'un logiciel de reconnaissance d'image,
a3) capturer l'image d'un véhicule ou d'une partie d'un véhicule ayant le pneumatique à remplir, en particulier de la plaque d'immatriculation du véhicule ou du code FIN ou d'un code-barres/code QR ou un d'autre moyen d'identification de véhicule, et déterminer le type de véhicule au moyen d'un logiciel de reconnaissance d'image ;
et, de préférence,
B)
b1) capturer une image d'une table de pression de pneumatique fournie avec le véhicule,
b2) lire les données de pression de pneumatique de la table au moyen d'un logiciel de reconnaissance de texte,
et
C)
c1) déterminer une pression de pneumatique correcte sur la base du type de pneumatique déterminé et du type de véhicule déterminé et, de préférence, sur la base des données de la table de pression de pneumatique,
c2) fournir les données de pression de pneumatique correctes à un affichage et/ou à un système de remplissage de pression de pneumatique.

2. Procédé selon la revendication 1, **caractérisé par** les étapes supplémentaires suivants :
f) déterminer la condition de charge réelle du véhicule sur la base de l'image de véhicule capturée au moyen d'un logiciel de reconnaissance d'image ou sur la base d'informations fournies par le véhicule,
en option en tenant compte en outre du type de véhicule déterminé, ou en entrant manuellement une condition de charge, en particulier une condition de charge par conception,
g) déterminer la pression de pneumatique correcte tout en tenant compte de la condition de charge de véhicule.

3. Procédé selon la revendication 1 ou 2, **caractérisé en ce que**, additionnellement, la température du pneumatique et/ou de l'air à l'intérieur du pneumatique et/ou la température ambiante sont mesurées et prises en compte tout en déterminant la pression de remplissage de pneumatique correcte.

4. Procédé selon la revendication 3, **caractérisé en ce que** la température est mesurée sans contact au moyen d'un capteur, en particulier d'un capteur infrarouge, ou au moyen d'un capteur à contact.

5. Procédé selon l'une quelconque des revendications précédentes, **caractérisé en ce que** les données de pression déterminées sont stockées dans un moyen de stockage de données, en particulier conjointement avec le type de véhicule déterminé et/ou un code d'identification de véhicule.

6. Procédé selon l'une quelconque des revendications 1 à 5, dans lequel les données de pression de pneumatique correctes sont fournies à un système de remplissage de pression de pneumatique, **caractérisé en ce que** le système de remplissage de pression de pneumatique fournit automatiquement la pression de remplissage de pneumatique correcte à un pneumatique.

7. Procédé selon l'une quelconque des revendications 1 à 6, dans lequel les données de pression de pneumatique correctes sont fournies à un système de remplissage de pression de pneumatique, **caractérisé en ce que** le système de remplissage de pression de pneumatique fournit un reçu de la pression remplie.

8. Système de remplissage de pneumatiques de véhicule avec de l'air pressurisé, comprenant :
A)
a1) un moyen de capture d'une image d'un pneumatique à remplir, en particulier de la paroi latérale d'un pneumatique,
a2) un moyen de détermination du type du pneumatique de l'image de pneumatique capturée au moyen d'un logiciel de reconnaissance d'image,
a3) un moyen de capture de l'image d'un véhicule ou d'une partie d'un véhicule ayant le pneumatique à remplir, en particulier de la plaque d'immatriculation du véhicule, du code FIN ou un d'un code-barres ou d'un code QR ou d'un autre moyen d'identification de véhicule, et de détermination du type de véhicule au moyen d'un logiciel de reconnaissance d'image ;
et, de préférence,
B)
b1) un moyen de capture d'une image d'une table de pression de pneumatique fournie avec le véhicule,
b2) moyen de lecture des données de pression de pneumatique de la table au moyen d'un logiciel de reconnaissance de texte,
et
C)
c1) un moyen de détermination d'une pression de pneumatique correcte sur la base du type de pneumatique déterminé et du type de véhicule déterminé et, de préférence, sur la base des données de la table de pression de pneumatique,
c2) un moyen de fourniture des données de pression de pneumatique correctes à un affichage et/ou à un système de remplissage de pression de pneumatique.

9. Système selon la revendication 8, **caractérisé par** les moyens supplémentaires suivants :
f) un moyen de détermination de la condition de charge réelle du véhicule sur la base de l'image de véhicule capturée au moyen d'un logiciel de reconnaissance d'image ou sur la base d'informations fournies par le véhicule, en option en tenant compte en outre du type de véhicule déterminé, ou un moyen d'entrée manuelle d'une condition de charge, en particulier d'une condition de charge par conception,
g) un moyen de détermination de la pression de pneumatique correcte tout en tenant compte de ladite condition de charge de véhicule.

10. Système selon la revendication 8 ou 9, **caractérisé par** un moyen de mesurage de la température du pneumatique et/ou de l'air à l'intérieur du pneumatique et/ou de la température ambiante, et de prise en compte de ces données tout en déterminant la pression de remplissage de pneumatique correcte.

11. Système selon la revendication 10, **caractérisé en ce que** le moyen de mesurage de la température est un capteur sans contact, en particulier un capteur infrarouge, ou un capteur à contact.

12. Système selon l'une quelconque des revendications 8 à 11, **caractérisé en ce qu'**il comprend en outre un moyen de stockage des données de pression déterminées dans un moyen de stockage de données,
en particulier conjointement avec le type de véhicule déterminé et/ou le code d'identification de véhicule.

13. Système selon l'une quelconque des revendications 8 à 12, dans lequel le système comprend un moyen de fourniture des données de pression de pneumatique correctes à un système de remplissage de pression de pneumatique, **caractérisé en ce que** le système de remplissage de pression de pneumatique comprend un moyen de fourniture automatique de la pression de remplissage de pneumatique correcte à un pneumatique.

14. Système selon l'une quelconque des revendications 8 à 13, dans lequel le système comprend un moyen de fourniture des données de pression de pneumatique correctes à un système de remplissage de pression de pneumatique, **caractérisé en ce que** le système de remplissage de pression de pneumatique comprend un moyen de fourniture d'un reçu de la pression remplie.
